# EUROPÄISCHE PATENTANMELDUNG

(11) **EP 0 753 446 A1**
(43) Veröffentlichungstag der Anmeldung: **15.01.1997**
(21) Anmeldenummer: 96110995.6
(22) Anmeldetag: 09.07.1996
(51) Int. Cl.: B62B 5/04, F16D 53/00

(54) **Bremsvorrichtung für Rollstühle**

(30) Priorität: 13.07.1995 DE 19525275
(71) Anmelder: Maschinenbau Wiedemann & Schmieding GmbH, 59199 Bönen (DE)
(72) Erfinder: Schmieding, Peter, 59199 Bönen (DE)
(74) Vertreter: Henfling, Fritz, Dipl.-Ing.

(57) **Zusammenfassung**

Zur Erzielung einer verbesserten und dann auch durch Witterungseinflüsse unbeeinflußten Bremswirkung wird für Rollstühle eine Bremsvorrichtung mit am Gestell des Rollstuhls gelagerten vom Rollstuhlfahrer betätigbaren, auf die Treibräder des Rollstuhls zur Einwirkung kommenden Bremsbacken vorgeschlagen, bei der die Felgen (11) der Räder des Rollstuhls mit einem seitlich über die Felge (11) umlaufend axial vorspringenden, in Richtung auf den Rollstuhl orientierten Steg (14) versehen sind, auf den die jeweilige Bremsbacke (z.B. 241), vorzugsweise die Bremsbacken (241, 241') einer Doppelbackenbremse, einwirkt/einwirken.

## Beschreibung

Die Erfindung betrifft eine Bremsvorrichtung für Rollstühle, mit am Gestell des Rollstuhls gelagerten, vom Rollstuhlfahrer betätigbaren, auf die Treibräder des Rollstuhls zur Einwirkung kommenden Bremsbacken.

Als Bremssysteme für durch Muskelkraft bewegte Behindertenfahrzeuge, wie Rollstühle, kommen bislang Trommelbremsen und auf dem Kniehebelprinzip basierende, in der Bremssituation gegen die Bereifung der Räder zur Anlage kommende Bremsen zum Einsatz. Was Trommelbremsen betrifft, sind sie kostenträchtig, mit ihnen ist dann auch der Nachteil verbunden, daß sich eine Zusammenfassung der Räder mit dem Gestell des Rollstuhls über eine Schnellsteckverbindung nur unter hohem technischem Aufwand realisieren läßt. Bei auf dem Kniehebelprinzip basierenden Bremssystemen beeinflußt der Reifendruck den Bremseffekt, die Reifen werden bei angezogener Bremse dann auch örtlich stark belastet. Feuchtigkeit und Straßenschmutz beeinträchtigen hierbei dann auch die Bremsung.

Ausgehend vom Stand der Technik liegt der Erfindung die Aufgabe zugrunde, insbesondere für nicht motorisch angetriebene Rollstühle ein Bremssystem zu entwickeln, das eine von Witterungseinflüssen unbeeinflußte Bremswirkung sicherstellt und weitergehend dann auch eine problemlose Zusammenfassung der Laufräder mit dem Fahrzeuggestell über eine Schnellsteckverbindung ermöglicht.

Die Aufgabe wird mit einer Bremsvorrichtung für Rollstühle, mit am Gestell des Rollstuhls gelagerten, vom Rollstuhlfahrer betätigbaren, auf die Treibräder des Rollstuhls zur Einwirkung kommenden Bremsbacken gelöst, die dadurch gekennzeichnet ist, daß die Felgen der Räder mit einem seitlich über die Feige umlaufend axial vorspringenden, in Richtung auf das Gestell des Rollstuhls orientierten Steg versehen sind, auf den die jeweilige Bremsbacke einwirkt.

Ausgestaltungen des erfindungsgemäßen Bremssystems ergeben sich aus den Unteransprüchen 2 bis 4.

Der bodenfreie Bremssteg unterliegt praktisch keiner die Bremswirkung beeinträchtigenden Verschmutzung. Kommt eine Doppelbackenbremse zum Einsatz, resultiert daraus ein ausgezeichneter Bremseffekt. Die schwimmende Lagerung der Bremsbacken einer Doppelbackenbremse stellt in vorteilhafter Weise eine übereinstimmende Anstellung beider Bremsbacken gegen den Bremssteg sicher. Als Nebeneffekt stellt sich ein, daß der Reifen des abbremsbaren Rades keiner zusätzlichen Beanspruchung durch die Bremse ausgesetzt ist. Auch die leichte Demontierbarkeit und Montierbarkeit der Räder über eine Schnellsteckverbindung bleibt hierbei in wünschenswerter Weise ohne weiteres erhalten.

In der Zeichnung ist die Erfindung anhand eines Ausführungsbeispiels weitergehend erläutert. Es zeigen:
- Figur 1: die Bestandteil der erfindungsgemäßen Bremsvorrichtung bildende Radfelge im Querschnitt,
- Figur 2: die Felge in Figur 2 mit einer ihr zugeordneten Doppelbackenbremse, die Bremse im Schnitt nach Linie II-II in Figur 3,
- Figur 3: die Bremse in Figur 2 in Seitenansicht, teilweise geschnitten,
- Figur 4: den Bestandteil der Bremsvorrichtung bildenden Bedienungshebel.

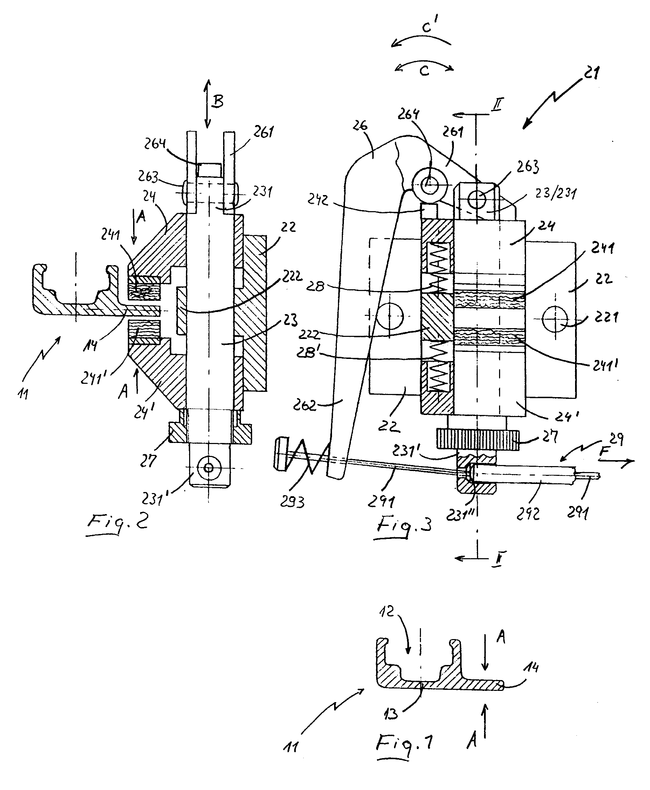

An der erfindungsgemäßen Feige 11 mit ihrer Aufnahme 12 für den nicht dargestellten Reifen ist in der Flucht des Felgengrundes 13 ein seitlich über die Felge vorspringender umlaufender Steg 14 ausgebildet. Gegen diesen Steg 14 kommt die im folgenden beschriebene Doppelbackenbremse 21 im angestellten Zustand zur Anlage (Pfeile A, A' in Figur 1).

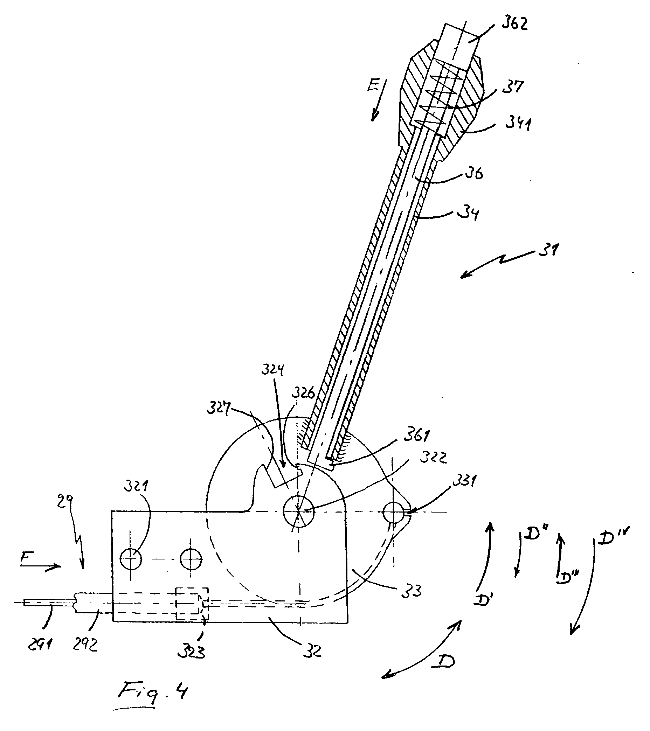

Die aus den Figuren 2 und 3 entnehmbare Bremse 21 besteht aus der am nicht dargestellten Rollstuhlgestell anschlagbaren (221) Lagerplatte 22 mit dem daran ausgebildeten Lager 222 für den sich darin mit beidseitigem Überstand führenden, darin im Sinne des Doppelpfeiles B in Figur 2 verlagerbaren Bolzen 23. Auf dem Bolzen 23 führen sich die beidseits des Lagers 222 am Bolzen angesetzten Bremsbacken 24, 24' mit ihnen zugeordneten Bremsklötzen 241, 241'. Am Überstand 231 des Bolzens 23 über die Bremsbacke 24 ist ein Winkelhebel 26 mit seinem sich über eine Druckrolle 264 an einem an der Bremsbacke 24 angesetzten Druckstück 242 abstützenden Hebelarm 261 im Sinne des Doppelpfeiles C in Figur 3 verschwenkbar gelagert (263). Die gegenüberliegende Bremsbacke 24' wird Überstand 231' des Bolzens 23 belassend hinterfangen von einer ein Widerlager für die Bremsbacke bildenden, in Gewindeeingriff mit dem Bolzen 23 befindlichen Rändelmutter 27. Über die Rändelmutter 27 erfolgt das Ein- sowie das Nachstellen der Bremsbacken 24, 24'. Der Überstand 231' des Bolzens 23 über die Rändelmutter 27 wird durchsetzt von der am freien Ende des Hebelarms 262 des Winkelhebels 26 angreifenden Litze 291 eines Bowdenzuges 29, die sich an dessen Außenseite über eine Feder 293 abstützt. Die die Litze 291 umgebende Hülse 292 stützt sich am bzw. im Überstand 231' des Bolzens 23 über die Rändelmutter 27 ab (231''). Sich zwischen den Bremsbacken 24, 24' und dem Lager 222 erstreckende Rückstellfedern 28, 28' überführen die Bremsbacken 24, 24' bei gelöster Bremse in die in Figur 2 erkennbare Ausgangslage, in der die Bremsklötze 241, 241' von der Felge 11, d.h. von deren Bremssteg 14, abgehoben sind.

Der Bowdenzug 29 erstreckt sich zwischen der in den Figuren 2 und 3 dargestellten Bremse 21 und der in einer für den Rollstuhlfahrer leicht zugänglichen Position am Gestell des Rollstuhls angeschlagenen Betätigungsvorrichtung 31 für die Bremse etwa der aus Figur 4 entnehmbaren Ausgestaltung. Nach Figur 4 ist hierfür auch wieder eine am Rollstuhl anschlagbare (321) Lagerplatte 32 vorgesehen, in der eine Rolle 33 im Sinne des Doppelpfeiles D in Figur 4 drehbar gelagert ist (322). An der Rolle 33 ist zum einen die sich am Umfang der Rolle abstützende Litze 291 des Bowdenzuges 29 festgelegt (331), dessen Hülse 292 sich an bzw. in der Lagerplatte 32 abstützt (323), zum anderen springt aus der Rolle der am freien Ende in ein Griffstück 341 auslaufende Bedienungshebel 34 vor, in dem sich das Verriegelungsgestänge 36 führt, an dem rollenseitig eine Klinke 361 ausgebildet ist, die bei im Sinne des Pfeiles D' in Figur 4 verlagertem Bedienungshebel 34 mit einer an der Lagerplatte 32 ausgebildeten Raste 326 bei über den Druckknopf 362 gegen die Wirkung einer Rückstellfeder 37 in die an der Lagerplatte 32 ausgebildete Aufnahme 324 abgesenktem (Pfeil E in Figur 4) Verriegelungsgestänge 36 nach dem Auflaufen des Gestängeüberstandes 361 gegen den Begrenzungsanschlag 327 und begrenztem Zurückverschwenken des Betätigungshebels 34 (Pfeil D'' in Figur 4) verrastet. Hervorgerufen durch die Verlagerung des Bedienungshebels 34 im Sinne des Pfeiles D' in Figur 4 wird die Litze 291 des Bowdenzuges 29 angezogen (Pfeile F in den Figuren 3 und 4), woraus ein Verschwenken des Bestandteil der Bremse 21 bildenden Winkelhebels 26 im Sinne des Pfeiles C' in Figur 3 resultiert, das die Anstellung der Bremsbacken 24 und 24' (Pfeile A in Figur 2) bis zur Anlage der Bremsklötze 241, 241' gegen den Bestandteil der Feige 11 bildenden Bremssteg 14 bewirkt. Gelöst wird die Bremse durch erneutes Anstellen des Bedienungshebels im Sinne des Pfeiles D''' in Figur 4, wobei sich die Klinke 361 des Verriegelungsgestänges 36 von der Raste 326 löst und das Verrieglungsgestänge 36 unter der Einwirkung der Rückstellfeder 37 wieder in seiner Ausgangslage übergeht, womit das Zurückverschwenken (Pfeil D ^{IV} in Figur 4) des Betätigungshebels 34 mit entsprechendem Rücklauf der Bowdenzuglitze 291 unter der Einwirkung der die Bremsbacken 24, 24' vom Bremssteg 14 abhebenden Federn 28, 28', gegen deren Federkraft die Bremsbacken 24, 24' angestellt wurden, möglich wird. Das Spiel D'', D''' wird durch die Feder 283 ermöglicht.

Eine den Bremssteg einfassende, im angestellten Zustand auf beide Seiten des Bremsstegs einwirkende Doppelbackenbremse ergibt einen ausgezeichneten Bremseffekt. Das schließt die Verwendung einer nur mit einer Seite des Bremssteges in Wechselwirkung tretenden Bremse natürlich nicht aus.

## Patentansprüche

1. Bremsvorrichtung für Rollstühle mit am Gestell des Rollstuhls gelagerten, vom Rollstuhlfahrer betätigbaren, auf die Treibräder des Rollstuhls zur Einwirkung kommenden Bremsbacken, dadurch gekennzeichnet, daß die Feigen (11) der Räder mit einem seitlich über die Felge (11) umlaufend axial vorspringenden, in Richtung auf den Rollstuhl orientierten Steg (14) versehen sind, auf den die jeweilige Bremsbacke (z.B. 241) einwirkt.

2. Bremsvorrichtung nach Anspruch 1, dadurch gekennzeichnet, daß der Bremssteg (14) im wesentlichen in der Flucht des Felgengrundes (13) über die Felge (11) vorspringt.

3. Bremsvorrichtung nach Anspruch 1 oder Anspruch 2, gekennzeichnet durch Doppelbackenbremsen, deren gemeinsam anstellende Bremsbacken (241, 241') von beiden Seiten her gegen den über die Felge (11) vorspringenden Steg (14) zur Anlage kommen.

4. Bremsvorrichtung nach Anspruch 2, gekennzeichnet durch eine schwimmende Lagerung der Bremsbacken (241, 241').
